# EUROPEAN PATENT APPLICATION

(11) **EP 1 734 154 A1**
(43) Date of publication of application: **20.12.2006**
(21) Application number: 06250042.6
(22) Date of filing: 05.01.2006
(51) Int. Cl.: C23C 28/00, C23C 28/04, C04B 41/00, C04B 41/89, F01D 5/28, C04B 37/00

(54) **Multilayered environmental barrier coating and related articles and methods**

(30) Priority: 13.06.2005 US 35303
(71) Applicant: GENERAL ELECTRIC COMPANY, Schenectady, NY 12345 (US)
(72) Inventor: Metscher, Peter Joel, Niskayuna, NY 12309 (US); Luthra, Krishan Lal, Schenectady, NY 12309 (US); Johnson, Curtis Alan, Niskayuna, NY 12309 (US); Saak, Jennifer Su, Maple Green, Pennsylvania 19002 (US)
(74) Representative: Pedder, James Cuthbert

(57) **Abstract**

An article (100) comprising a substrate (105) and a plurality (110) of coating units (115, 120, 125) disposed over the substrate (105) is provided. Each coating unit (115, 120, 125) comprises an oxygen-getter layer (116) and a barrier layer (117). Embodiments of the present invention introduce redundancy to enhance the robustness of a coating system. Multiple protective coating units are disposed over a substrate (105) so that failure of one of the coating units will be far less likely to subject the substrate (105) to direct risk of exposure to the environment. Failure of an outer coating unit (115, 120, 125) merely exposes a pristine protective coating unit (115, 120, 125), rather than the substrate (105) or a less protective coating layer. In this way, embodiments of the present invention drastically reduce reliance on the performance of one particular coating layer, promoting a more robust and reliable system.

## Description

This invention relates to high-temperature machine components. More particularly, this invention relates to coating systems for protecting machine components from exposure to high-temperature environments. This invention also relates to methods for protecting articles.

Silicon-bearing materials, such as, for example, ceramics, alloys, and intermetallics, offer attractive properties for use in structures designed for service at high temperatures in such applications as gas turbine engines, heat exchangers, and internal combustion engines, for example. However, the environments characteristic of these applications often contain water vapor, which at high temperatures is known to cause significant surface recession and mass loss in silicon-bearing materials. The water vapor reacts with the structural material at high temperatures to form volatile silicon-containing species, often resulting in unacceptably high recession rates.

Environmental barrier coatings (EBC's) are applied to silicon-bearing materials susceptible to attack by high temperature water vapor, and provide protection by prohibiting contact between the water vapor and the surface of the material. EBC's are designed to be relatively stable chemically in high-temperature, water vapor-containing environments and to minimize connected porosity and vertical cracks, which provide exposure paths between the material surface and the environment. Cracking is minimized in part by minimizing the thermal expansion mismatch between the EBC and the underlying material, and improved adhesion and environmental resistance can be achieved through the use of multiple layers of different materials. One exemplary conventional EBC system, as described in U.S. Patent No. 6,410,148, comprises a silicon or silica bond layer applied to a silicon-bearing substrate; an intermediate layer comprising mullite or a mullite-alkaline earth aluminosilicate mixture deposited over the bond layer; and a top layer comprising an alkaline earth aluminosilicate deposited over the intermediate layer. In another example, U.S. Patent No. 6,296,941, the top layer is a yttrium silicate layer rather than an aluminosilicate.

The above coating systems can provide suitable protection for articles in demanding environments. However, cracking, spalling, volatilization, and other mechanisms operating on localized areas of the EBC top layer expose the underlying material-a silicon bond coat, for instance-to the environment, leading to rapid oxidation and volatilization. Once the bondcoat is locally removed by these mechanisms, rapid recession of the underlying silicon-bearing substrate ensues. Perforation of the substrate material can lead to catastrophic failure of the system, as parts that were not designed for high temperature service suddenly become directly exposed to a high temperature environment. Therefore, there is a need to provide articles protected by robust environmental barrier coating systems having the capability to reliably withstand long term exposure to high temperature environments containing water vapor.

Embodiments of the present invention are provided to address these and other needs. One embodiment is an article comprising a substrate and a plurality of coating units disposed over the substrate. Each coating unit comprises an oxygen-getter layer and a barrier layer. A more particular embodiment is an article comprising a substrate comprising silicon, and a plurality of coating units disposed over the substrate. Each coating unit comprises an oxygen-getter layer comprising at least one material selected from the group consisting of elemental silicon and a silicide, and a barrier layer comprising at least one material selected from the group consisting of an aluminosilicate, a silicate, and an aluminate. The plurality of coating units forms a series of barrier layers having at least one getter layer disposed between successive barrier layers.

The invention will now be described in greater detail, by way of example, with reference to the drawings, in which:-
Figure 1 is a schematic cross-sectional view of an EBC system typical of the prior art;
Figure 2 is a schematic cross-sectional view of an embodiment of the present invention; and
Figure 3 is a photomicrograph of a cross-section of an exemplary embodiment of the present invention.

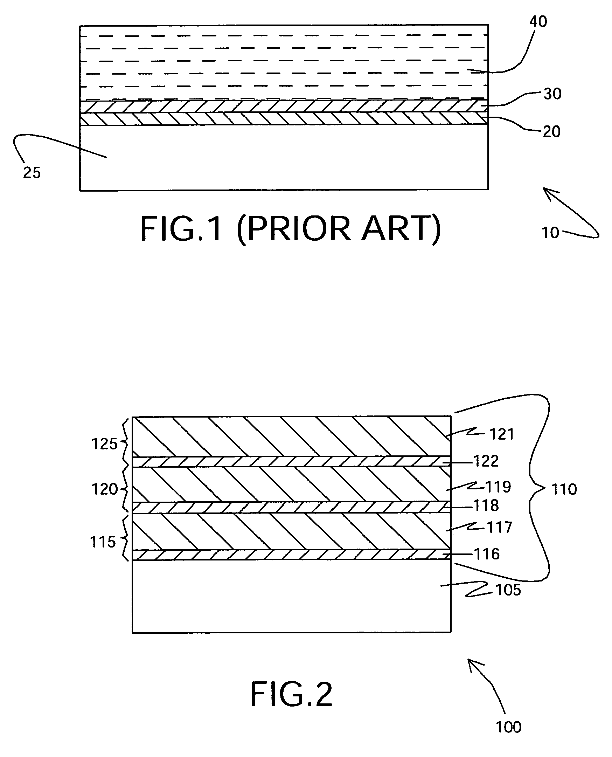

Referring to Figure 1, a typical EBC system 10 comprises a bondcoat 20 made of silicon applied to a silicon-bearing substrate 25; an intermediate layer 30, deposited over bond coat 20, often made of mullite or a mullite-alkaline earth aluminosilicate mixture; and a top layer 40, often made of an alkaline earth aluminosilicate or other protective ceramic material, deposited over intermediate layer 30. EBC system 10 is highly reliant upon the presence and integrity of top layer 40, because the other layers afford much less environmental protection. As described above, even a relatively small defect in this three-layer coating system can lead to rapid, premature failure of the entire component. Such a failure is a considerable risk because top layer 40, being a ceramic coating, is susceptible to defects in processing and to damage during component installation and service.

Embodiments of the present invention introduce redundancy to enhance the robustness of an EBC system. Multiple protective coating units are disposed over a substrate so that, unlike conventional systems described above, failure of one of the coating units will be far less likely to subject the substrate to direct risk of exposure to the environment. Failure of an outer coating unit merely exposes a pristine protective coating unit, rather than the substrate or a less protective coating layer. In this way, embodiments of the present invention drastically reduce reliance on the performance of one particular coating layer, promoting a more robust and reliable system.

Referring to Figure 2, one embodiment of the present invention is an article 100 comprising a substrate 105 and a plurality 110 of coating units 115, 120, 125 disposed over substrate 105. Figure 2 shows an exemplary embodiment in which the plurality 110 of coating units comprises three coating units (115, 120, 125), but more or fewer units may be used, depending on the application. Each coating unit 115 comprises an oxygen-getter layer 116 and a barrier layer 117. A bond coat (not shown) is optionally disposed in contact with the substrate, with the plurality 110 of coating units disposed over the bondcoat. The bondcoat comprises silicon or a silicide, in certain embodiments, and in some embodiments has a thickness in the range from about 25 micrometers to about 200 micrometers.

Substrate 105 comprises silicon in certain embodiments, including, for example, substrates comprising ceramic compounds, metal alloys, intermetallic compounds, or combinations of these. Examples of intermetallic compounds include, but are not limited to, niobium silicide and molybdenum silicide. Examples of suitable ceramic compounds include, but are not limited to, silicon carbide and silicon nitride. Embodiments of the present invention include those where the substrate comprises a ceramic matrix composite (CMC) material, including where the CMC comprises a matrix phase and a reinforcement phase, both of which phases comprise silicon carbide. Regardless of material composition, in some embodiments substrate 105 comprises a component of a turbine assembly, such as, among other components, a combustor component, a shroud, a turbine blade, or a turbine vane.

The oxygen-getter layer 116 is used to stop or substantially inhibit the diffusion of oxygen from the environment into the substrate 105. As used herein, an "oxygen-getter" means a substance having a high affinity for oxygen atoms or molecules. In certain embodiments, oxygen-getter layer 116 comprises silicon. Suitable examples of an oxygen-getter layer material include elemental silicon (including, for example, a material consisting essentially of silicon) and a silicide (meaning a compound of silicon and one or more additional chemical elements). The getter layer, in some embodiments, has a thickness of up to 250 micrometers. In certain embodiments, this thickness is in the range from about 50 micrometers to about 150 micrometers, and in particular embodiments, the thickness is in the range from about 80 micrometers to about 120 micrometers.

Barrier layer 117, as that term is used herein, means a coating that is designed to provide resistance to recession in high temperature, water vapor-containing environments, and further to inhibit the penetration of water vapor to underlying layers and substrate. In some embodiments, barrier layer 117 comprises a ceramic, such as an oxide. Examples of suitable oxide materials include aluminosilicates, silicates, and aluminates. Alkaline earth aluminosilicates such as barium strontium aluminosilicate, rare earth silicates such as yttrium monosilicate, and alkaline earth aluminates are particularly suitable barrier layer materials, but other compounds having considerable resistance to recession in high temperature, water vapor-containing environments are suitable as well. In some embodiments, barrier layer 117 comprises a metal. Suitable metals for use as barrier layer 117 include, but are not limited to, platinum, palladium, rhodium, ruthenium, rhenium, osmium, and iridium, and alloys comprising at least one of any of the foregoing. Barrier layer 117 has a thickness of up to 750 micrometers in some embodiments. In certain embodiments, this thickness is in the range from about 75 micrometers to about 500 micrometers. In particular embodiments, the thickness is in the range from about 75 micrometers to about 125 micrometers. Selection of barrier layer 117 thickness will depend on a number of design considerations, including, for instance, the nature of the expected service environment, the material selected for use as barrier layer 117, and the desired service life.

Numerous alternative combinations of deposition sequence, material selection, layer thicknesses, and the like, are encompassed by embodiments of the present invention. In the exemplary embodiment depicted in Figure 2, the plurality 110 of coating units is disposed to form a series of barrier layers 117, 119, 121, with at least one getter layer 116, 118, 122 disposed between successive barrier layers 117, 119, 121 in the series. Such an arrangement allows for the substantial reduction of oxygen diffusion through the barrier layers 117, 119, 121 to the substrate 105. Also in the exemplary embodiment of Figure 2, each coating unit of the plurality 110 is substantially identical to the other coating units of the plurality 110. As used herein, "substantially identical" means equivalent to within the limits of normal process variation, in position of the layers, the composition of the layers, and the thickness of the layers. The embodiment depicted in Figure 2 is merely one possibility out of many provided by embodiments of the present invention, and is not a requirement. For example, in some embodiments, at least one of the coating units includes at least one layer that differs from corresponding layers of other units in terms of thickness, composition, or the position of the layer relative to the other layers in the coating unit. For instance, a barrier layer in one coating unit disposed on an article may comprise a rare earth silicate, whereas a barrier layer in a different coating unit on the same article may comprise a different material, such as an aluminosilicate.

In certain embodiments, at least one coating unit of the plurality 110 further comprises at least one additional layer (not shown). This additional layer may be positioned over or under either of the getter layer or the barrier layer, or may be positioned between these two layers. Additional layers can be used to perform any of several desirable functions. For example, an additional layer having a coefficient of thermal expansion (CTE) intermediate to that of the barrier layer material and the getter layer material may be disposed between the getter layer and the barrier layer to reduce coefficient of thermal expansion (CTE) mismatch stresses between the two layers. In one particular embodiment, an additional layer comprising mullite, or a mixture of mullite and barium strontium aluminosilicate (BSAS), is disposed between a getter layer comprising elemental silicon and a barrier layer comprising BSAS. Alternatively, an additional layer comprising a rare-earth disilicate is disposed between a getter layer comprising elemental silicon and a barrier layer comprising a rare-earth monosilicate. In another embodiment, an additional layer disposed between getter and barrier layers provides a diffusion barrier to minimize chemical interaction between the two layers. This function is useful, for instance, where a barrier layer comprising a platinum-group metal is selected for one or more coating units in conjunction with a barrier layer of elemental silicon, due to the reactivity between these materials at typical operation temperatures of gas turbine components.

The thickness, chemical composition, and position within the coating unit of any additional layer will depend upon a number of factors, including, among others, the composition of other layers in the unit, their thicknesses, and the environment of the particular application. An additional layer suitable for use in embodiments of the present invention desirably has a CTE that will not substantially contribute to thermal stresses within the coating unit or between the plurality of coatings and the substrate. In one embodiment, an additional layer comprises a ceramic material, such as, for instance, an oxide. The thickness of additional layers is generally, though not necessarily, comparable to the thickness of other layers of the coating unit, as described below.

Total thickness of each coating unit 115, 120, 125, as well as the overall thickness of the plurality 110 of coating units, depends on several of the design considerations described earlier for selection of individual coating thickness. In some embodiments, each coating unit of the plurality 110 has a thickness of up to about 1000 micrometers. In particular embodiments, the coating unit thickness is in the range from about 75 micrometers to about 375 micrometers. Moreover, in some embodiments, total thickness of plurality 110 is up to about 2000 micrometers. This total thickness is in the range from about 150 micrometers to about 750 micrometers in particular embodiments.

As will be apparent from Figure 2, embodiments of the present invention provide a redundant system to reduce the dependency of system performance on the integrity of any single layer in the system. For example, if the outermost coating unit 125 is damaged, an equivalent amount of environmental resistance is provided by middle unit 120, which in turn can be replaced by first unit 115 in the event of a breach of middle unit 120. In a conventional EBC system 10 (Fig.1), a single local defect in topcoat 40 could rapidly lead to direct attack of substrate 25. However, in the system of the present invention, a single defect in topcoat 121 merely leads to the exposure of an equivalent barrier layer 119. Embodiments of the present invention thus provide a more defect tolerant, reliable EBC system for use in aggressive environments.

To take full advantage of the attributes described above, a particular embodiment of the present invention is an article comprising a substrate 105 comprising silicon, and a plurality 110 of coating units 115 disposed over substrate 105. Each coating unit 115 comprises an oxygen-getter layer 116 and a barrier layer 117. Getter layer 116 comprises at least one material selected from the group consisting of elemental silicon and a silicide. Barrier layer 117 comprises at least one material selected from the group consisting of an aluminosilicate, a silicate, and an aluminate. The plurality 110 of coating units forms a series of barrier layers 117, 119, 121 having at least one getter layer 116, 118, 122 disposed between successive barrier layers.

All of the coatings described herein may be deposited on substrate 25 by any of various manufacturing processes, including but not limited to spray processes such as plasma spraying, thermal spraying, and the like; vapor deposition processes such as physical vapor deposition, chemical vapor deposition, and the like; and other coating processes such as electroplating. Depending on the compositions selected for use and the processes used to deposit the layers, the coatings may be given various heat treatments to improve strength, to form desirable microstructural constituent phases, or to bring about other desired characteristics.

### EXAMPLE

Without further elaboration, it is believed that one skilled in the art can, using the description herein, utilize the present invention to its fullest extent. The following example is included to provide additional guidance to those skilled in the art in practicing the claimed invention. The example provided is merely representative of the work that contributes to the teaching of the present application. Accordingly, this example is not intended to limit the invention, as defined in the appended claims, in any manner.

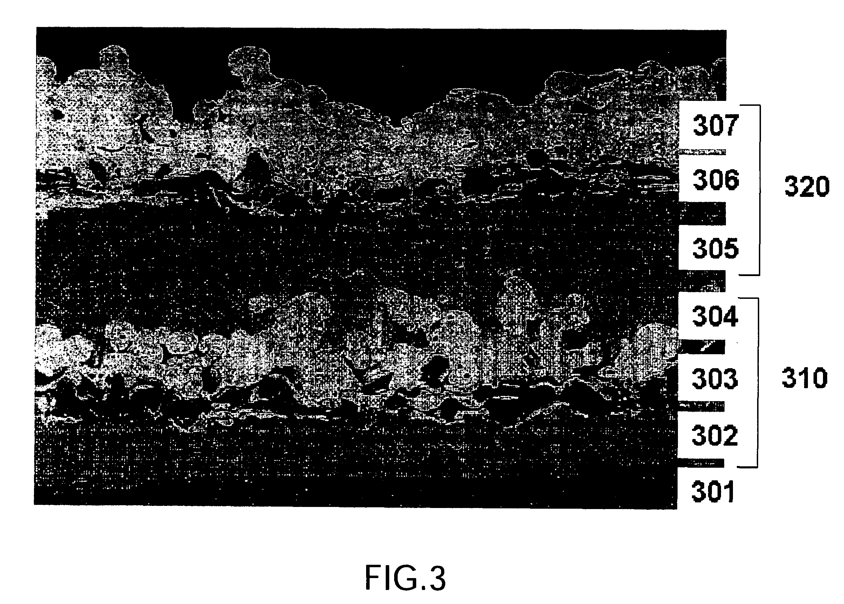

Referring to Figure 3, a silicon-bearing substrate 301 was plasma spray-coated with two coating units 310, 320. Each coating unit comprised an oxygen-getter layer 302, 305 of elemental silicon; an additional layer 303, 306 comprising a mixture of BSAS and mullite disposed over the getter layer 302,305; and a barrier layer 304, 307 of BSAS disposed over the additional layer 303,306. The total thickness of each unit was approximately 300-500 micrometers. The coated substrate was exposed for 500 hours of cyclic steam exposure (250 cycles) in a 90% H₂O-10% O₂ environment, which has a water vapor partial pressure approximately similar to that of a typical gas turbine. The coating system accumulated minimal damage during this exposure. Oxygen-getter layer 305 of the top coating unit 320 was observed to have a thin oxide layer on it, much as would be observed for a similarly exposed silicon bondcoat 20 in a conventional EBC system (Fig. 1). On the other hand, oxygen-getter layer 302 of the bottom coating unit 310 had no oxide layer on it, indicating that the continuous top unit getter layer 305 prevented penetration of oxygen and water vapor to the lower EBC coating unit 310. In short, the bottom coating unit 310 remained in pristine condition during the exposure while the top coating unit 320 behaved like a typical EBC.

For the sake of good order, various features of the invention are set out in the following clauses
1. An article (100) comprising:
   a substrate (105); and
   a plurality of coating units disposed over said substrate (105),
      wherein each coating unit (115, 120, 125) comprises
   an oxygen-getter layer (116), and
   a barrier layer (117).
2. The article (100) of clause 1, wherein said oxygen-getter layer (116) comprises silicon.
3. The article (100) of clause 2, wherein said oxygen-getter layer (116) comprises at least one material selected from the group consisting of elemental silicon and a silicide.
4. The article (100) of clause 1, wherein said barrier layer (117) comprises a ceramic.
5. The article (100) of clause 5, wherein said ceramic comprises an oxide.
6. The article (100) of clause 6, wherein said oxide comprises at least one selected from the group consisting of an aluminosilicate, a silicate, and an aluminate.
7. The article (100) of clause 1, wherein said plurality (110) of coating units (115, 120, 125) forms a series of said barrier barrier layers (117) having at least one said getter layer disposed between successive barrier barrier layers (117).
8. The article (100) of clause 1, wherein each coating unit (115, 120, 125) of said plurality (110) has a thickness of up to about 1000 micrometers.
9. The article (100) of clause 1, wherein said plurality (110) of coating units (115, 120, 125) has a total thickness of up to about 2000 micrometers.
10. The article (100) of clause 1, wherein said oxygen-getter layer (116) has a thickness of up to about 250 micrometers.
11. The article (100) of clause 1, wherein said barrier layer (117) has a thickness of up to about 750 micrometers.
12. The article (100) of clause 1, wherein said substrate (105) comprises silicon.
13. The article (100) of clause 1, wherein said substrate (105) comprises a ceramic compound, said ceramic compound comprising silicon.
14. The article (100) of clause 1, wherein said ceramic compound comprises at least one selected from the group consisting of silicon carbide and silicon nitride.
15. The article (100) of clause 1, wherein said substrate (105) comprises a component of a turbine assembly.
16. The article (100) of clause 1, wherein at least one coating unit (115, 120, 125) of said plurality (110) further comprises at least one additional layer disposed in a location selected from the group consisting of
   a. between said oxygen-getter layer (116) and said barrier layer (117),
   b. over said barrier layer (117), and
   c. under said oxygen-getter layer (116).
17. The article (100) of clause 16, wherein said additional layer is disposed between said oxygen-getter layer (116) and said barrier layer (117), and
   wherein said additional layer has a coefficient of thermal expansion intermediate to respective coefficients of thermal expansion of said barrier layer (117) and said oxygen-getter layer (116).
18. The article (100) of clause 16, wherein said barrier layer (117) comprises barium strontium aluminosilicate, said getter layer comprises silicon, and said additional layer comprises at least one selected from the group consisting of mullite, barium strontium aluminosilicate, and mixtures thereof.
19. The article (100) of clause 16, wherein said barrier layer (117) comprises a rare-earth monosilicate, said getter layer comprises silicon, and said additional layer comprises a rare-earth disilicate.
20. An article (100) comprising:
   a substrate (105) comprising silicon; and
   a plurality (110) of coating units (115, 120, 125) disposed over said substrate (105),
      wherein each coating unit (115, 120, 125) comprises
   an oxygen-getter layer (116) comprising at least one material selected from the group consisting of elemental silicon and a silicide, and
   a barrier layer (117) comprising at least one material selected from the group consisting of an aluminosilicate, a silicate, and an aluminate;
      wherein said plurality (110) of coating units (115, 120, 125) forms a series of said barrier barrier layers (117) having at least one said getter layer disposed between successive barrier barrier layers (117).

## Claims

1. An article (100) comprising:
a substrate (105); and
a plurality of coating units disposed over said substrate (105),
wherein each coating unit (115, 120, 125) comprises
an oxygen-getter layer (116), and
a barrier layer (117).

2. The article (100) of claim 1, wherein said oxygen-getter layer (116) comprises silicon.

3. The article (100) of claim 2, wherein said oxygen-getter layer (116) comprises at least one material selected from the group consisting of elemental silicon and a silicide.

4. The article (100) of claim 1, wherein said barrier layer (117) comprises a ceramic.

5. The article (100) of claim 5, wherein said ceramic comprises an oxide.

6. The article (100) of claim 6, wherein said oxide comprises at least one selected from the group consisting of an aluminosilicate, a silicate, and an aluminate.

7. The article (100) of claim 1, wherein said plurality (110) of coating units (115, 120, 125) forms a series of said barrier barrier layers (117) having at least one said getter layer disposed between successive barrier barrier layers (117).

8. The article (100) of claim 1, wherein each coating unit (115, 120, 125) of said plurality (110) has a thickness of up to about 1000 micrometers.

9. The article (100) of claim 1, wherein said plurality (110) of coating units (115, 120, 125) has a total thickness of up to about 2000 micrometers.

10. An article (100) comprising:
a substrate (105) comprising silicon; and
a plurality (110) of coating units (115, 120, 125) disposed over said substrate (105),
wherein each coating unit (115, 120, 125) comprises
an oxygen-getter layer (116) comprising at least one material selected from the group consisting of elemental silicon and a silicide, and
a barrier layer (117) comprising at least one material selected from the group consisting of an aluminosilicate, a silicate, and an aluminate;
wherein said plurality (110) of coating units (115, 120, 125) forms a series of said barrier barrier layers (117) having at least one said getter layer disposed between successive barrier barrier layers (117).
